# EUROPÄISCHE PATENTSCHRIFT

(11) **EP 3 384 582 B1**
(45) Veröffentlichungstag und Bekanntmachung des Hinweises auf die Patenterteilung: **25.11.2020**
(21) Anmeldenummer: 16805806.3
(22) Anmeldetag: 02.12.2016
(51) Int. Cl.: H02K 15/04, H02K 15/06

(54) **VERFAHREN UND VORRICHTUNG ZUR HERSTELLUNG VON ROTOREN ODER STATOREN VON ELEKTRISCHEN MASCHINEN**
METHOD AND DEVICE FOR PRODUCING ROTORS OR STATORS OF ELECTRIC MACHINES
PROCÉDÉ ET DISPOSITIF DE FABRICATION DE ROTORS OU DE STATORS DE MACHINES ÉLECTRIQUES

(30) Priorität: 02.12.2015 DE 102015120963
(43) Veröffentlichungstag der Anmeldung: 10.10.2018
(73) Patentinhaber: Schaeffler ELMOTEC STATOMAT GmbH, 61184 Karben (DE)
(72) Erfinder: SADIKU, Sadik, 63543 Neuberg (DE); WITWER, Keith, Markle, Indiana 46770 (US)
(74) Vertreter: Boult Wade Tennant LLP
(86) Internationale Anmeldenummer: PCT/EP2016/079574
(87) Internationale Veröffentlichungsnummer: WO 2017/093477

(56) Entgegenhaltungen:
- EP-A1- 1 469 579
- EP-A2- 0 274 969
- EP-A2- 1 639 688
- FR-A1- 3 020 199
- US-A1- 2006 022 547

## Beschreibung

Die vorliegende Erfindung befasst sich mit einem Verfahren gemäß dem Oberbegriff von Anspruch 1. Bei derartigen flachen Wicklungen werden in der Regel Flachdrähte verarbeitet, die einen höheren Füllfaktor in den Nuten eines Stators oder Rotors ermöglichen als Drähte mit rundem Querschnitt, was dem Gesamtwirkungsgrad einer elektrischen Maschine mit einem solchen Rotor oder Stator zu Gute kommt. Gegenstand der vorliegenden Erfindung ist auch eine Vorrichtung zur Durchführung wesentlicher Schritte eines solchen Verfahrens nach dem Oberbegriff des Anspruches 12.

Zur Herstellung entsprechender Rotoren oder Statoren sind bereits eine Vielzahl von Verfahren entwickelt worden, die sich primär mit dem Erzeugen der flachen Wicklungen selbst befassen. Die Spulenwicklungen bestehen aus einer Anzahl miteinander verflochtener Drähte, die mehrfach gegenläufig umgebogen werden, so dass parallel zueinander liegende Schenkel der Drähte, die zum Ausfüllen der Nuten bestimmt sind, durch dachartige Wicklungsköpfe verbunden sind, die stirnseitig über die Rotoren oder Statoren überstehen, wobei eine flache und drehbare Wickelschablone sowie eine Drahthandhabungsvorrichtung zum Einsatz kommen.

Diese Verfahren dienen vor allem dazu, eine sogenannte verteilte Wellenwicklung herzustellen, die dann in die Nuten eines Stators (oder Rotors) eingelegt werden kann. Eine verteilte Wellenwicklung weist eine Vielzahl paralleler Drähte auf, die gerade Abschnitte besitzen, die in den Nuten eines Stators angeordnet werden. Diese geraden Abschnitte alternieren zwischen einer inneren und einer benachbarten äußeren Radiallage in dem Stator, wenn sich das Drahtmuster radial um den Stator bewegt. Dieses verteilte Wellenmuster enthält eine Anzahl X an Phasen oder gruppierter Nuten in dem Stator. Im Allgemeinen ist X ein Vielfaches von 3, es sind aber auch Konstruktionen möglich, bei welchen X eine beliebige andere ganze Zahl ist. Die Anzahl paralleler Drähte in dem Wicklungsmuster der verteilten Welle beträgt 2X. In dem Wellenmuster werden die geraden Abschnitte des Drahtes aus einem Schlitz mit den geraden Abschnitten des Drahtes in der Nut verbunden, die X Nuten entfernt in der Gegenuhrzeigerrichtung und der Uhrzeigerrichtung liegen, wobei sie durch gabelförmige Verbindungsdrähte oder Endbiegeabschnitte verbunden. Die Welle wird dadurch erzeugt, dass einer der beiden verbindenden Endabschnitte mit der Nut X Nuten entfernt in der Gegenuhrzeigerrichtung verbunden wird, während auf der gegenüberliegenden Seite des Stators der zugehörige Endbiegeabschnitt mit der Nut X Nuten entfernt in der Uhrzeigerrichtung verbunden wird. Diese Endverbindungen alternieren, da sich das Drahtmuster radial um den Stator bewegt. Diese gabelförmigen Verbindungen sorgen auch für den Lagewechsel zwischen den alternierenden inneren und äußeren bzw. äußeren und inneren radial benachbarten Lagen der geraden Drahtabschnitte über die Statornuten bei jedem der einzelnen Drähte, die das Wicklungsmuster bilden. Das endgültig vorgefertigte Drahtmuster besitzt 2 X parallele Drähte, die in einem kontinuierlichen, verteilten und miteinander verwobenen Wellenmuster gewickelt sind, das flach ausgelegt ist. Dieses Muster hat 2 X Anfangsdrähte in einer oberen Lage und 2 X Enddrähte in einer unteren Lage. Diese sind einfache gerade Drahtabschnitte. Alle anderen geraden Drahtabschnitte zwischen diesen Anfangs- und Enddrähten sind paarweise mit einem Draht in der unteren und einem Draht in der oberen Lage ausgebildet. Die Gesamtzahl dieser geraden Drahtabschnitte bestimmt sich durch die Anzahl von Leitern, die in jede Nut der Stator-Konstruktion mit diesem Muster ausgefüllt werden. Die Anzahl an Leitern in einer Statornut muss ein Vielfaches von zwei sein, wobei die Gesamtzahl an Drähten in einer zu füllenden Statornut bei diesem Muster zwei A beträgt, wobei A die Anzahl an Umdrehungen darstellt, um die sich das Wicklungsmuster um den Stator-Umfang windet.

Aus der EP 1 469 579 B1 ist ein Verfahren zur Herstellung einer solchen Wicklung bekannt, das auf einer sechseckigen Schablone basiert. In der Praxis konnte sich dieses Verfahren allerdings nicht durchsetzen, da die technische Umsetzung schwierig ist.

Aus der DE 10 2014 003 602 A1 ist ein Verfahren bekannt, das ebenso auf eine relativ komplexe Wickelschablone angewiesen wird, die in 120°-Schritten gedreht wird. Auch für dieses Verfahren ist eine komplexe Wickelvorrichtung erforderlich, deren technische Umsetzung schwierig ist.

Ein weiteres Verfahren ist aus der DE 10 2008 019 479 A1 bekannt. Dort werden, wie bereits angesprochen, zunächst zwei Wicklungshälften mittels einer flachen, leistenförmigen Schablone gewickelt, wobei dann anschließend die beiden Hälften miteinander zu der dann in den Stator einzulegenden Gesamtwicklung verflochten werden. Ein unmittelbares Wickeln aller Drähte mit der Anzahl 2 X ist nicht möglich, da nach dem Verschieben, das dem ersten Umbiegen zur Herstellung der gebogenen Wickelköpfe um den X-fachen Abstand der Drähte entsprechend die Hälfte der Drähte noch mit den Drähten im Bereich der Drahtzufuhr kollidieren würde. Das Zusammensetzen der beiden Hälften der verteilten Wellenwicklung ist zwar nicht sonderlich problematisch, stellt aber einen zusätzlichen Verfahrensschritt dar und erfordert ein exaktes Ausrichten der beiden Hälften zueinander, bevor sie in ein Magazin eingelegt werden, von welchem aus sie dann in die Nuten des Stators eingelegt werden. Die beiden letzten Schritte des Einlegens in das Magazin und des Übertragens in die Nuten des Stators sind als solches bekannt und werden auch in Ergänzung zu dem hier vorgestellten Verfahren eingesetzt, um mit den hergestellten Wicklungen dann schließlich den gewünschten Stator oder Rotor herzustellen.

Weiterhin ist aus der EP 0 274 969 B1 ein Verfahren zur Herstellung einer Wicklung bekannt, bei welchem ein Einzeldraht zu Ausbildung einzelner Windungen sukzessive um auf einem umlaufenden Gliederband angeordnete, quaderförmige Schablonen gebogen wird, d.h. für jede Windung ist eine eigene Schablone vorgesehen. Eine um ihre Längsachse zur Ausbildung einer Wicklung mit mehreren Windungen rotierende, leistenförmige Einzelschablone, mit der mehrere Drähte gleichzeitig verarbeitet werden können, ist nicht vorgesehen, ein Verschieben der Wicklung auf der Schablone in deren Längsrichtung ist nicht möglich, die Einzelwindungen werden am Ende des Gliederbandes einzeln an einen Rotor übergeben, wobei der Einzeldraht zur Ausbildung der Wickellagen mehrfach durchtrennt werden muss.

Ein neu entwickeltes Verfahren, das aber selbst nicht Gegenstand dieser Anmeldung ist, zielt darauf ab, unter Verwendung einer einfachen Wickelschablone die Herstellung der gesamten Spulenwicklung in einem Verfahrensablauf zu ermöglichen. Ein solches Verfahren sieht folgende Schritte vor:
A) Paralleles, gleichzeitiges Zuführen vom für die Spulenwicklung zum Einsatz kommender Drähte in einer Richtung senkrecht zur Drehachse der Wickelschablone;
B) Halten der Drähte an einer Fixierstelle in einem ersten Haltebereich der auszubildenden Schenkel auf der Wickelschablone;
C) Halten der Drähte an einer Fixierstelle in einem zweiten Haltebereich in einem Abstand vor der Wickelschablone bezogen auf die Zufuhrrichtung;
D) relatives Verschieben des ersten Haltebereiches der Wickelschablone relativ zum zweiten Haltebereich parallel zur Drehachse der Wickelschablone um ein Wegstück, dessen Länge ungefähr gleich oder gleich der Hälfte des Abstands der äußersten Drähte ist, wodurch ein bezüglich der Schenkel geneigter Drahtabschnitt zwischen dem ersten und dem zweiten Haltebereich geformt wird;
E) Drehen der Wickelschablone um 180°, wobei die Haltestelle aus dem ersten Haltebereich in einen dritten Haltebereich auf der dem ersten Haltebereich gegenüberliegenden Seite der Wickelschablone und die Haltestelle aus dem zweiten Haltebereich in den ersten Haltebereich verlagert wird;
F) Fixieren der nachgeführten Drähte an der Fixierstelle im zweiten Haltebereich;
G) vor oder nach Schritt F erfolgt ein Lösen der Haltewirkung im dritten Haltebereich;
H) Verschieben des ersten Haltebereiches relativ zum zweiten Haltebereich parallel zur Drehachse der Wickelschablone um ein Wegstück, dessen Länge ungefähr gleich oder gleich der Hälfte des Abstandes der äußersten Drähte ist, wodurch ein bezüglich der Schenkel geneigter Drahtabschnitt geformt wird;
I) Drehen der Wickelschablone um 180°, wobei wiederum die Fixierstelle im ersten Haltebereich in den dritten Haltebereich auf der dem ersten Haltebereich gegenüberliegenden Seite der Wickelschablone und die Haltestelle im zweiten Haltebereich in den ersten Haltebereich verlagert wird;
J) Wiederholung der Schritte F bis I, bis die Spulenwicklung vollständig ist;
K) Letztes relatives Verschieben des ersten Haltebereiches zum zweiten Haltebereich parallel zur Drehachse der Wickelschablone um ein Wegstück, dessen Länge ungefähr gleich oder gleich der Hälfte des Abstandes der äußersten Drähte ist, wodurch ein bezüglich der Schenkel geneigter Drahtabschnitt zwischen dem ersten und dem zweiten Haltebereich geformt wird;
L) Durchtrennen der Drähte am zweiten Haltebereich;
M) vollständiges oder teilweises Abstreifen der Spulenwicklung von der Wickelschablone.

Bekannt ist es aus der EP 1 639 688 B1, die flachen Wicklungen in einen Stator oder Rotor für eine elektrische Maschine einzuführen. Hierzu wird die Wicklung nach ihrer Herstellung in eine leistenförmige Aufnahme verbracht und dann anschließend von dort in den Rotor oder ein Übertragungswerkzeug gedrückt. Es hat sich aber gezeigt, dass die Verwendung der stab- oder leistenförmigen Aufnehmer für den Verfahrensablauf hinderlich ist, da diese sehr lang sein müssen, um die vollständigen flachen Wicklungen beispielsweise von einer Wickelschablone abnehmen zu können. Die Automatisierung eines solchen Ablaufes ist sehr schwierig und benötigt sehr viel Raum, die bisherigen Abläufe ließen sich aber auch wegen der Bewegungen in den unterschiedlichen Verfahrensschritten in unterschiedlichen Freiheitsgraden und der großen Werkstücklänge der empfindlichen Wicklungen nicht auf kompakteren Maschinen zusammenführen.

Die Aufgabe der Erfindung besteht darin, ein Verfahren bereitzustellen, das sich einfach und bei reduziertem Raumbedarf automatisieren lässt.

Die Hauptmerkmale der Erfindung sind im kennzeichnenden Teil von Anspruch 1 angegeben. Ausgestaltungen des Verfahrens sind Gegenstand der Ansprüche 2 bis 11.

Durch das verkürzte Ausführen der Wickelschablone wird es in Verbindung mit der Transfervorrichtung ermöglicht, die Wicklung mit ihren bereits erzeugten Windungen in die Radialnuten eines Rotors oder eines Übertragungswerkzeuges zum nachfolgenden Übertragen in die Radialnuten eines Stators einzuführen. Da in dieser Phase immer noch neue Windungen dadurch erzeugt werden müssen, dass sich die Wickelschablone relativ zu einer Drahtzufuhr dreht, werden alle an der Durchführung des Verfahrens beteiligten Einrichtungen, mit Ausnahme der Drahtzufuhr, während dieser Formvorgänge gemeinsam mit der Wickelschablone gedreht, so dass die Wicklung in sich nicht verformt werden kann und ein kontinuierlicher Übergang von der Wickelschablone bis in den mitgedrehten Rotor oder das mitgedrehte Übertragungswerkzeug geschaffen wird. Auch die mitgedrehte Transfervorrichtung veränderte ihre Relativposition zu der Wickelschablone und dem Rotor/Übertragungswerkzeug nur in Bezug auf ihre schrittweise mit dem Vorschub der Wicklung auf der Wickelschablone erfolgende axiale Förderbewegung.

Entsprechend ist das Verfahren vorzugsweise dahingehend ausgestaltet, dass die Wicklung durch wechselweises Verschieben von auf der Wickelschablone liegenden Drahtstegen der jeweiligen Windung zu den zugeführten Drähten und Rotieren der Wickelschablone um 180° erzeugt wird und während des Verschiebens die Transfervorrichtung um einen entsprechenden Weg parallel zur Drehachse der Wickelschablone verstellt und der Rotor oder das Übertragungswerkzeug synchron um seine eigene Mitteldrehachse gedreht wird.

In einer weiteren Ausgestaltung des Verfahrens ist vorgesehen, dass die Wickelköpfe der Wicklung nach dem Verlassen der Wickelschablone zwischen Verschiebevorgängen verklemmt werden. Hierdurch wird eine Stabilisierung der Wicklung im kritischen Übergabebereich nach der kurzen Wickelschablone erreicht, die insbesondere bei in sich instabilen Wicklungen vorteilhaft ist.

Weiterhin kann es von Vorteil sein, wenn die Wickelköpfe in der Transfervorrichtung zwischen dem Verschieben zwischen zwei Formhälften geformt werden. In der Regel steht an dieser Stelle genügende Raum zur Verfügung, um entsprechende Werkzeuge anzuordnen, die ebenfalls mit den anderen Einrichtungen rotieren können.

Für das Übertragen der Wicklung von der Transfervorrichtung in den Rotor/das Übertragungswerkzeuges können aus der EP 1 639 688 B1 prinzipiell bekannte Nocken verwendet werden, wobei der räumliche Ansatz der vorteilhaft getrennt zum Einsatz kommenden ersten und zweiten Nocken voneinander getrennt werden kann. Die Nocken können zur Unterstützung der Übertragung in der entsprechenden Richtung aktiv hin und her bewegt werden und/oder in der Bewegungsrichtung der Wicklung Anlaufschrägen aufweisen, so dass die auflaufenden Wicklungen mit ihren Windungen zunächst aus der Transfervorrichtung ausgehoben und dann in die Radialnuten eingedrückt werden.

In einer besonders bevorzugten Weiterbildung des Verfahrens werden die Windungen der Wicklung in der Transfervorrichtung in Aufnahmen abgelegt, die an und/oder zwischen Gliedern einer Gliederkette ausgebildet sind, wobei die Gliederkette über den Bereich zwischen der Wickelschablone und dem Übertragungswerkzeug oder dem Stator linear geführt wird.

Diese Ausgestaltung ermöglicht eine platzsparende Ausbildung der Transfervorrichtung, die problemlos um ein Vielfaches kürzer sein kann als die Gesamtlänge der Wicklung. Das Verfahren lässt sich damit auf kleinem Raum durchführen. Starre Aufnahmen, die einem Glied zugeordnet sind, ermöglichen ein besonders exakte Ausbildung, während Aufnahmen, die zwischen Gliedern im gestreckten Bereich der Kette entstehen eine einfachere Gliederkette ermöglichen, wobei ohne weiteres eine Kombination beider Varianten möglich ist, so dass z.B. nur jede zweite Aufnahme starr an einem Kettenglied ausgebildet ist, während die zwischenliegenden Aufnahmen im linearen Bereich zwischen benachbarten Kettengliedern ausgebildet sind. Die Gliederkette wird vorzugsweise über wenigstens ein formschlüssig mit ihr in Eingriff stehendes Zahn- oder Nockenrad angetrieben, um eine besonders exakte Positionierung der Kammern im Verfahren zu gewährleisten.

Vorzugsweise ist weiterhin vorgesehen, dass die Windungen mit Hilfe von zwischen sie eingreifenden Übertragungsstiften beim Übertragen in die Transfervorrichtung geführt werden. Diese Maßnahme, bei der die Übertragungsstifte aktiv das Verschieben der Windungen unterstützen oder nur ein unbeabsichtigtes Verformen der Windungen verhindern, sorgt für ein exaktes Ablegen der Windungen in den Aufnahmen der Transfervorrichtung.

Dies geschieht vorzugsweise dadurch, dass die Übertragungsstifte im Eingriff mit den Windungen während des Verschiebens mit den Windungen bewegt werden und zwischen den Verschiebvorgängen aus dem Eingriff mit den Windungen ausgerückt und in ihre Ausgangsposition zurückgeführt werden.

Schließlich kann ein weiterer Verfahrensschritt vorgesehen sein, bei welchem zwischen dem Erzeugen der Windungen auf der Wickelschablone und dem Übertragen der Windungen in die Transfervorrichtung Isolierstreifen zwischen Phasen der Windungen eingelegt werden. Ggf. muss hierzu zwar die Wickelschablone etwas länger ausgeführt werden, der Vorteil dieser Ausgestaltung ist aber, dass sich alle Wickelköpfe an dieser Stelle des Verfahrens in einer definierten Position befinden, was das Einschieben der Isolierstreifen aus Isolierpapier oder -kunststoff sehr vereinfacht.

Wie bereits eingangs erwähnt ist Gegenstand der vorliegenden Erfindung auch eine Vorrichtung, mit der das erfindungsgemäße Verfahren durchgeführt werden kann.

Entsprechend ist eine Vorrichtung mit den Merkmalen des Anspruches 12 vorgesehen, deren kennzeichnende Merkmale darin bestehen, dass die Wickelschablone kürzer als die zu erzeugende Wicklung ist und eine Drehvorrichtung vorgesehen ist, die eine synchrone Rotation der Wickelschablone, der Transfervorrichtung und des Rotors oder des Übertragungswerkzeuges um die Drehachse der Wickelschablone wenigstens dann bewerkstelligt, wenn die Wicklung sich von der Wickelschablone bis zum Rotor oder dem Übertragungswerkzeug erstreckt. Auf diese Weise bleibt kann das Verfahren kontinuierlich in der Vorrichtung von der Erzeugung der einzelnen Windungen bis zum fertigen Rotor oder für die Übertragung an den Stator fertig bestückten Übertragungswerkzeug durchgeführt werden.

Wie bereits im Zusammenhang mit dem Verfahren erläutert, weist die Transfervorrichtung vorzugsweise parallele Aufnahmen für die Windungen der Wicklung auf, wobei die Aufnahmen an oder zwischen benachbarten Gliedern einer Gliederkette ausbildet sind, wobei vorzugsweise die Gliederkette zwischen der Wickelschablone und dem Rotor/dem Übertragungswerkzeug linear gestreckt zwischen zwei Umlenkrollen geführt ist. Die Kette kann iin diesem Bereich auch durch eine Laufbahn unterstützt sein, die ein exakt lineare Führung auch ohne hohe Spannung der Gliederkette erlaubt.

Ebenfalls ist bereits erwähnt worden, dass vorzugsweise erste Nocken zur Übertragung der Windungen aus der Transfervorrichtung in die Radialnuten des Rotos/Übertragungswerkzeuges und/oder zweite Nocken zum Verschieben der Windungen in den Radialnuten radial nach innen vorgesehen sind.

Auch die bevorzugte Weiterbildung der Erfindung, wonach die ersten und oder zweiten Nocken senkrecht zur Bewegungsrichtung der Windungen verstellbar beweglich sind und/oder in der Bewegungsrichtung der Windungen Anlaufschrägen aufweisen, ist bereits diskutiert worden.

Besonders vorteilhaft ist eine bevorzugte Weiterbildung der Nocken, die vorsieht, dass die ersten und/oder zweiten Nocken rippen- oder scheibenförmig ausgebildet sind und durch in der Bewegungsrichtung der Transfervorrichtung oder der Drehrichtung des Übertragungswerkzeuges verlaufende Schlitze in die Aufnahmen in der Transfervorrichtung oder die Radialnuten des Übertragungswerkzeuges eingreifen. Durch diese Ausgestaltung lassen sich die Windungen von den Nocken besonders gut erfassen und definiert in eine bestimmte Lage in den Nuten des Stators oder des Übertragungswerkzeuges bewegen.

Die bevorzugten Ausführungsformen der Vorrichtung mit Übertragungsstiften, einer Wellenkopfformvorrichtung im Bereich der Transfervorrichtung und/oder einer Wellenkopfklemmvorrichtung an der Übergabestelle von der Wickelschablone zur Transfervorrichtung sind bereits im Zusammenhang mit dem Verfahren angesprochen worden.

Eine weitere bevorzugte Ausführungsform sieht ein Lagergehäuse vor, in welchem eine Transfereinheit, der eine Drehlagerung für den Rotor/das Übertragungswerkzeug und die Transfervorrichtung zugeordnet sind, um die Drehachse der Wickelschablone drehbar gelagert ist. Die Transfereinheit und die Wickelschablone können, müssen aber nicht dauerhaft drehstarr miteinander gekoppelt sein, es ist auch ein schaltbare drehstarre Verbindung mittels einer Kupplung oder eine elektronische Synchronisation möglich.

Hinsichtlich der Bewegungsabläufe ist es vorteilhaft, dass alle mit dem Handling der Wicklung zusammenhängende Bewegungsabläufe der Vorrichtung mechanisch durch eine Königswelle oder elektronisch durch eine geeignete Sensorik zur Erfassung der Bewegungen in Verbindung mit durch Servomotoren gesteuerten Bewegungen synchronisiert sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Draufsicht und Seitenansicht einer Vorrichtung zur Bestückung eines Übertragungswerkzeuges in einer Ausgangsstellung;
- Fig. 2: eine vergrößerte Einzelheit der Übergabestelle der Vorrichtung aus Fig.1;
- Fig. 3: eine weitere vergrößerte Einzelheit aus Fig.1;
- Fig. 4: eine Darstellung der Vorrichtung nach einem Schiebeformvorgang der Wicklung;
- Fig. 5: eine Darstellung der Vorrichtung mit zurückgezogenen Übertragungsstiften;
- Fig. 6: eine Darstellung der Vorrichtung mit zurückgesetzten Übertragungsstiften;
- Fig. 7: eine Darstellung der Vorrichtung mit wieder eingreifenden Übertragungsstiften, zurückgezogener Wickelschablone und aktivierter Wickelkopfformvorrichtung;
- Fig. 8: eine Darstellung der Vorrichtung mit geöffneter Wickelkopfformvorrichtung;
- Fig. 9: eine Darstellung der Vorrichtung nach einem Wickelvorgang mit um 180° gedrehter Transfereinheit;
- Fig.10: bis 14 die in Fig. 4 bis 8 veranschaulichten Arbeitsschritte mit um 180° gedrehter Transfereinheit.

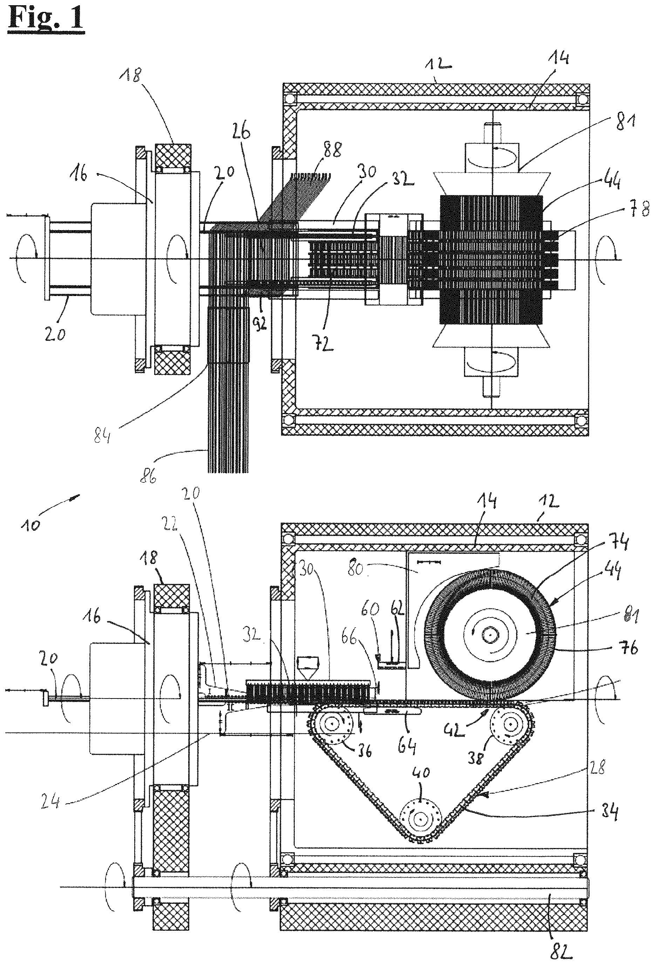

In Fig. 1 ist eine Vorrichtung zum Herstellen eines Rotors oder Stators für eine elektrische Maschine gezeigt, wobei genau genommen bei der Herstellung eines Stators noch ein nicht veranschaulichter Verfahrensschritt erfolgen muss, in welchem die Wicklung aus einem Übertragungswerkzeug 44, das in der gezeigten Vorrichtung mit der Wicklung bestückt wird, in den Stator der Maschine übertragen wird. Ein solches Verfahren ist prinzipiell z.B. aus der EP 1 639688 B1 bekannt.

Die schematisch veranschaulichte Vorrichtung 10 besitzt ein Lagergehäuse 12, in welchem eine Transfereinheit 14 konzentrisch zu einem Wickelkopf16 drehbar gelagert ist, wobei letztere ebenfalls in dem Lagergehäuse 12 oder einem separaten Lagerbock 18 gelagert ist, wie in den Abbildungen veranschaulicht ist.

In dem Wickelkopf 16 ist eine Wickelschablone 20 drehstarr aber axial verstellbar geführt, wobei die Drehachse mittig durch die leistenförmige Wickelschablone 20 verläuft. Weiterhin sind in dem Wickelkopf 16 zwei Drahthalter/-Schieber 22, 24 axial und radial bezüglich der Drehachse verstellbar gehaltert, die jeweils einer Flachseite der Wickelschablone 20 zugeordnet sind und entsprechend exzentrisch zur Drehachse angeordnet sind, wie dies jeweils aus der unteren Ansicht der Abbildungen gut zu erkennen ist. Insoweit entspricht die Wickelvorrichtung bekannten Ausführungsformen mit der Ausnahme, dass die Wickelschablone 20 hier erheblich kürzer ausgebildet ist als die Länge der insgesamt zu erzeugenden Wicklung 26, von welcher in allen Abbildungen schematisch nur zwei Windungen im Bereich der Wickelschablone gezeigt sind, um die Übersichtlichkeit der Darstellungen zu wahren.

Um die auf der Wickelschablone erzeugten Wicklungen in eine Transfervorrichtung 28 zu überführen, sind an einem gemeinsamen Träger 30 angeordnete Übertragungsstifte 32 vorgesehen. Die Übertragungsstifte 32 mit ihrem Träger 30 sind ebenso der drehbaren Transfereinheit 14 zugeordnet wie die gesamte Transfervorrichtung 28. Der Träger 30 ist in radialer und axialer Richtung in Bezug auf die Drehachse verstellbar, worauf später noch näher eingegangen wird.

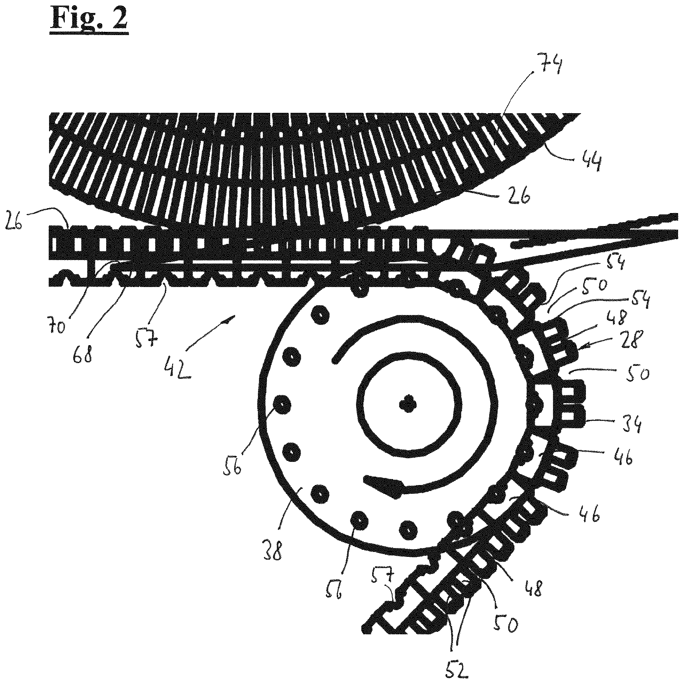

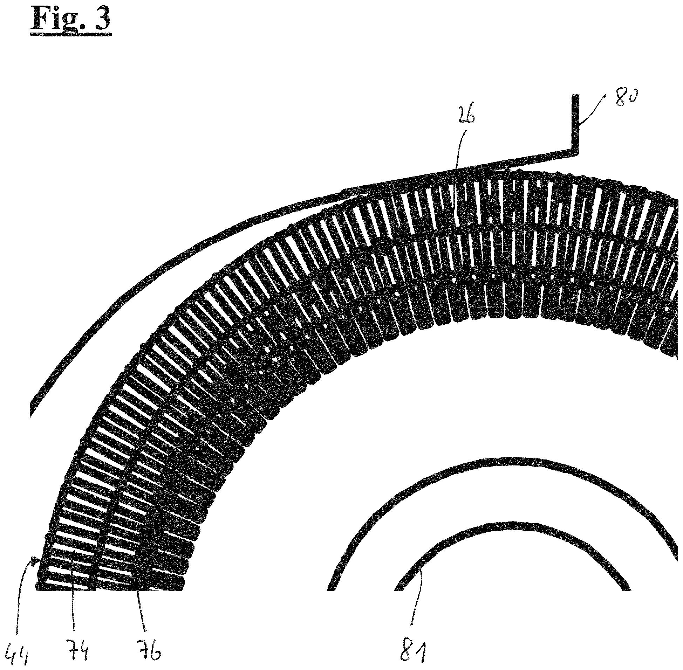

Die Transfervorrichtung 28 besitzt eine umlaufende Gliederkette 34, die über hier drei Umlenkrollen 36, 38 und 40 umgelenkt ist. Zwischen einer ersten Umlenkrolle 36 und einer zweiten Umlenkrolle 38 ist die Gliederkette 34 linear aufgespannt, so dass in einem Bereich zwischen der Wickelschablone 20 und einer Übergabestelle 42 an ein Übertragungswerkzeug 44 die Wicklung 26 abgeflacht und ohne Biegung transportiert werden kann. Um die Wicklung sicher aufnehmen zu können, sind an und zwischen Kettengliedern 46 der Kette 34 starre und variable Aufnahmen 48 und 50 ausgebildet. Die starren Aufnahmen 48 sind jeweils durch relativ zueinander starr ausgeformte Innenwandungen 52 der jeweiligen Kettenglieder 46 ausgebildet, während die variablen Aufnahmen 50 zwischen Außenwandungen 54 benachbarter Kettenglieder 46 dann ausgebildet werden, wenn sich die Gliederkette 34 in einem linear gestreckten Zustand befindet (siehe hierzu auch Fig. 2 und 3). Die Gliederkette 34 wird formschlüssig mitgenommen, wobei dies im gezeigten Ausführungsbeispiel beispielhaft mittels Transportstiften 56 erfolgt, die in geeignete Ausnehmungen 57 an den Kettengliedern 46 eingreifen. Als angetriebene Umlenkrolle eignet sich grundsätzlich jede der gezeigten Umlenkrollen, bevorzugt die dritte Antriebsrolle 40, wobei auch mehrere angetrieben Rollen in Frage kommen. Auch ein separater Antrieb, der an einer Stelle zwischen den Umlenkrollen formschlüssig mit der Gliederkette 34 zusammenwirkt, ist selbstverständlich möglich.

Im Übergangsbereich zwischen der Wickelschablone 20 und der Transfervorrichtung 28 ist eine Nockenbahn 58 vorgesehen, die dafür sorgt, dass das Niveau der Wicklung 26 in den Aufnahmen 48, 50 der Transfervorrichtung 28 ungefähr dem mittleren Niveau der Wickelschablone 20 entspricht.

Zwischen der Wickelschablone 20 und dem Übertragungswerkzeug 44 ist weiterhin eine Wickelkopfformvorrichtung 60 vorgesehen, die ein bewegliches Formwerkzeug 62 und eine unterhalb der Gliederkette 34 angeordnete Matrize 64 besitzt. Auch die Wickelkopfformvorrichtung 60 ist gemeinsam rotierend mit der Transfereinheit 14 ausgebildet. Im Bereich der Matrize ist ferner ein Klemmvorrichtung 66 für die Wickelköpfe der Wicklung vorgesehen, wobei diese die Wicklung dann in Bezug auf die Transfervorrichtung 28 fixiert, wenn die Übertragungsstifte 32 zurückgezogen sind und ihrerseits die Wicklung 26 nicht stabilisieren können. Die Klemmvorrichtung 66 dreht sich mit der Transfervorrichtung 28, ist aber wie die Wickelkopfformvorrichtung 60 in axialer Richtung nicht beweglich.

In Transportrichtung kurz vor der zweiten Umlenkrolle 38 greifen erste, scheibenartige Nocken 68 mit Anlaufschrägen 70 (siehe Fig. 2) durch Schlitze 72 in der Gliederkette 34 und heben während einer Vorschubbewegung der Transfervorrichtung 28 die Wicklung 26 an, so dass die entsprechenden Windungen aus den Aufnahmen 48, 50 der Gliederkette ausgehoben und in Radialnuten 74 in dem bereits angesprochenen Übertragungswerkzeug 44 eingedrückt werden.

Das Übertragungswerkzeug 44 besteht im Wesentlichen aus einem ringförmigen Träger 76 mit den bereits erwähnten Radialnuten 74, die in axialer Richtung erweitert sind. Die Radialnuten 74 sind durch senkrecht zu ihnen ausgerichtete Schlitze 78 unterbrochen, in die verstellbare zweite, scheibenförmige Nocken 80 eingreifen können. Das Übertragungswerkzeug 44 ist in einer angetriebenen Drehführung 81 eingespannt, die gemeinsam mit der Transfereinheit 14 rotierend konzipiert ist. Weiterhin verfügt sie über einen Drehantrieb (nicht gezeigt), der synchron mit dem Vorschub der Transfervorrichtung 28 das Übertragungswerkzeug 44 dreht.

Zur Synchronisation der Bewegungen aller zusammenwirkenden Einrichtungen innerhalb der Vorrichtung und insbesondere zur Synchronisation der Drehbewegung zwischen dem Wickelkopf 16 und der Transfereinheit 14 ist eine Königswelle 82 vorgesehen, wobei die mechanische Synchronisation auch durch eine elektronische Synchronisation mit Sensoren zur Positionserfassung und elektronisch angesteuerten Servomotoren ersetzt sein kann.

Nicht gemeinsam mit der Wickelschablone 20 und der Transfereinheit 14 drehend ist eine Drahtführung 84 angeordnet, die die Drähte 86 für die Wicklung 26 von einem Drahtvorrat (nicht gezeigt) abzieht und in Richtung der Wickelschablone 20 führt. Die Drahtführung hat auch die Funktion einer Klemmvorrichtung und kann wenigstens in den beiden Freiheitsgraden einer gedachten radialen Ebene in Bezug auf die Drehachse der Wickelschablone bewegt werden.

Zwischen den Drahtschiebern 22, 24 und den Übertragungsstiften 32 kann eine Isolierstation vorgesehen sein, die elektrische Isolierungen zwischen Drähte mit unterschiedlichen Phasen einbringt, was an dieser Stelle ohne Verlängerung der Taktzeiten möglich ist. Ggf. muss die Wickelschablone etwas länger ausgeführt sein, um genügend axialen Bauraum für die Isolierstation zur Verfügung zu haben.

Ausgehend von Fig.1 wird nachfolgend ein Zyklus zur Herstellung einer Windung beschrieben, der vielfach wiederholt wird, bis die vollständige Wicklung erzeugt ist. Die besonderen Schritte zu Beginn des Herstellungsvorgangs und an dessen Ende werden nicht im Detail ausgeführt. Die Wicklung ist schematisch mit Anschlussdrähten 88 und lediglich zwei erzeugten Windungen dargestellt, die Beschreibung bezieht sich aber auf eine Wicklung 26, die bereits in einem derart großen Umfang erzeugt ist, dass sie sich bis in die Radialnuten 74 des Übertragungswerkzeuges 44 hinein erstreckt, die Anschlussdrähte befinden sich tatsächlich entsprechend bereits an einer seitlich über das Übertragungswerkzeug 44 hervorstehenden Position. Die gezeigten Positionen sind bei der folgenden Betrachtung entsprechend nicht weiter zu beachten.

Bei der in Fig. 1 gezeigten Stellung, sind die Drähte 86 fluchtend bis zur Wickelschablone 20 ausgerichtet, wobei die Drahtführung 84 in einem bestimmten Abstand von der Wickelschablone 20 angeordnet ist und die Drähte dort auch verklemmt. Ein erster Drahtschieber 22 auf der oberen Seite der Wickelschablone 20 im Sinne der Darstellung hält die Drähte auf der Wickelschablone, während auf der Unterseite der Wickelschablone der zweite Drahtschieber 24 in Bezug auf den Wickelkopf 16 weiter axial ausgefahren ist und ebenfalls die dort verlaufenden Drähte auf der Wickelschablone 20 hält.

Im weiteren Verlauf befinden sich die Übertragungsstifte 32 im Übergangsbereich zur Transfervorrichtung 28 in Eingriff mit den Windungen auf der Oberseite der Wickelschablone, d.h. die Stifte greifen zwischen die Windungen und stabilisieren sie. Die Klemmvorrichtung 66 ist geöffnet und die Wickelkopfformvorrichtung 60 befindet sich in einer Ruhestellung.

Die Wicklung 26 ist im weiteren axialen Verlauf in den Aufnahmen 48, 50 der Gliederkette 34 gehalten und verläuft dann weiter in den Radialnuten 74 des Übertragungswerkzeuges 44, wobei die Windungen zunächst radial außen liegen und dann in Drehrichtung nach den zweiten Nocken 80 radial weiter innen übereinander gewickelt angeordnet sind.

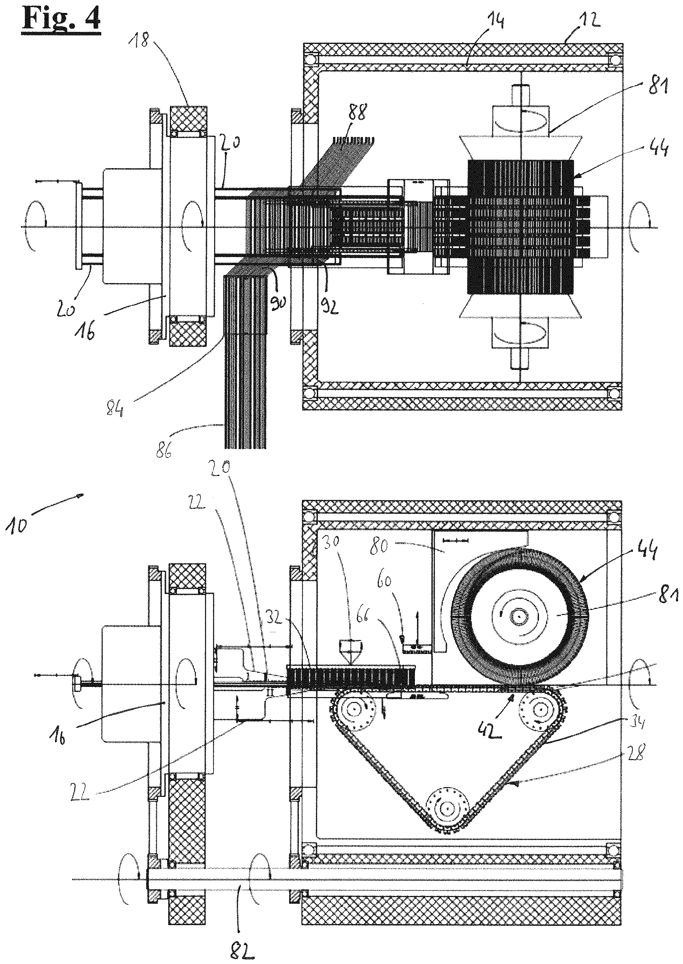

In einem ersten Schritt, dessen Endzustand in Fig.4 gezeigt ist, werden die ersten und zweiten Drahtschieber 22, 24 axial um das Wegstück der Breite einer halben Windung aus dem Wickelkopf 16 heraus bewegt. Synchron bewegen sich die Übertragungsstifte 32, die Gliederkette 34 sowie das Übertragungswerkzeug 44, das um einen Winkel gedreht wird, der einem Weg des Außenumfanges gleich dem axialen Verschiebeweg entspricht. Auch die Wickelschablone 20 wird um ein entsprechendes Wegstück bewegt, so dass es in diesem Schritt nicht zu Relativbewegungen zwischen den bereits gewickelten Drähten 86 und der Wickelschablone 20 kommt.

Mit diesem Schritt wird ein geneigter Drahtabschnitt 90 zwischen der Drahtzufuhr 84 und dem ersten Drahtschieber 22 erzeugt, aus dem später ein Wicklungskopf 92 der Wicklung 26 gebogen wird.

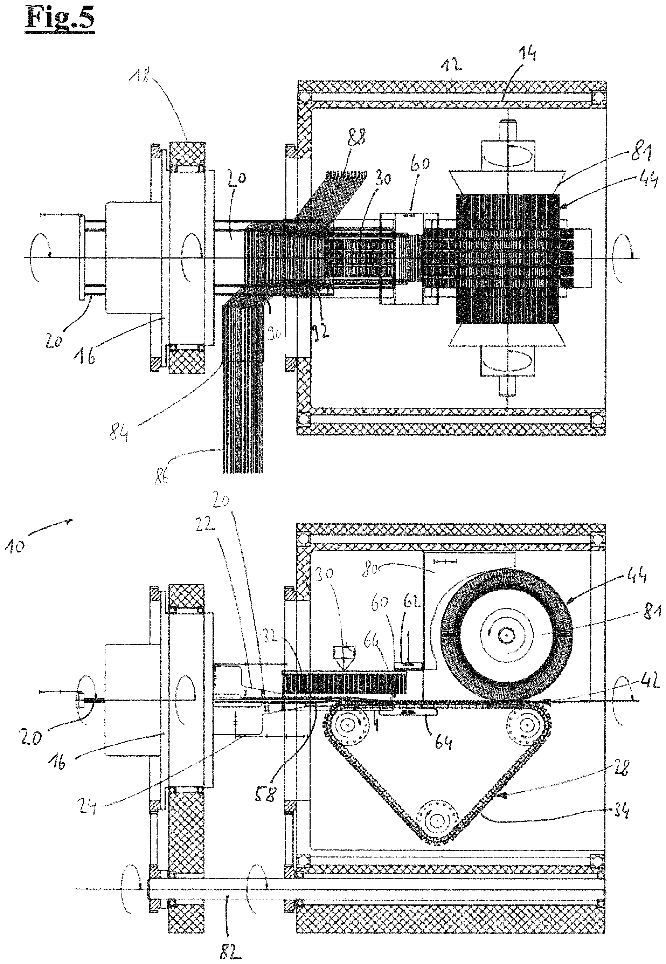

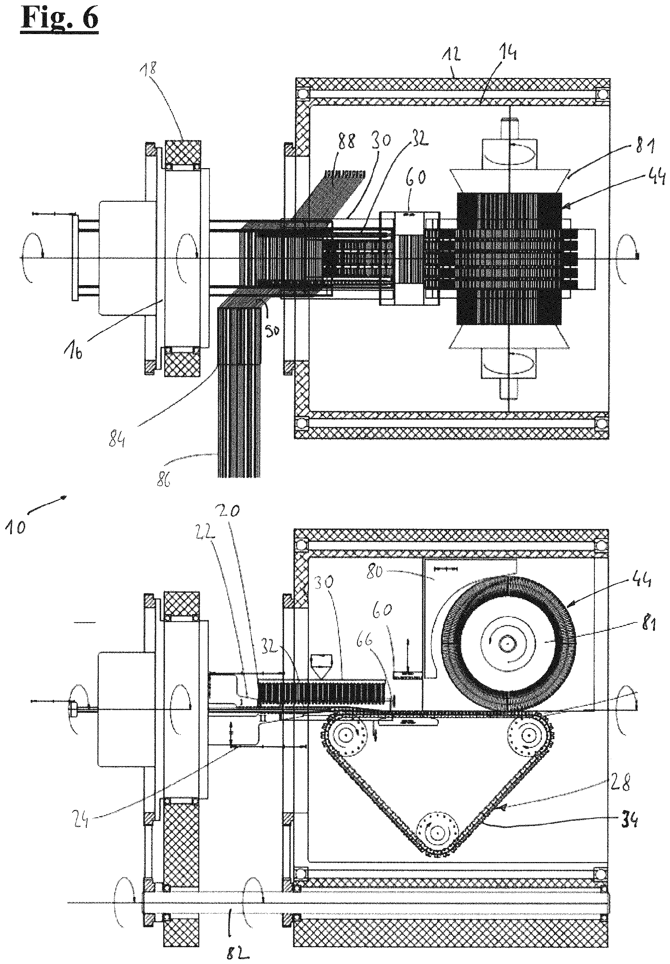

Nach Abschluss dieses Schrittes wird die Klemmvorrichtung 66 geschlossen und verklemmt die dort liegenden Wicklungsköpfe 92, während die Übertragungsstifte 32 aus dem Eingriff mit den Windungen gebracht werden. Der entsprechende Endzustand ist in Fig. 5 veranschaulicht, wobei aus diesem Zustand heraus die Übertragungsstifte 32 axial in Richtung des Wickelkopfes 16 zurück in ihre Ausgangsstellung bewegt werden (siehe Fig. 6).

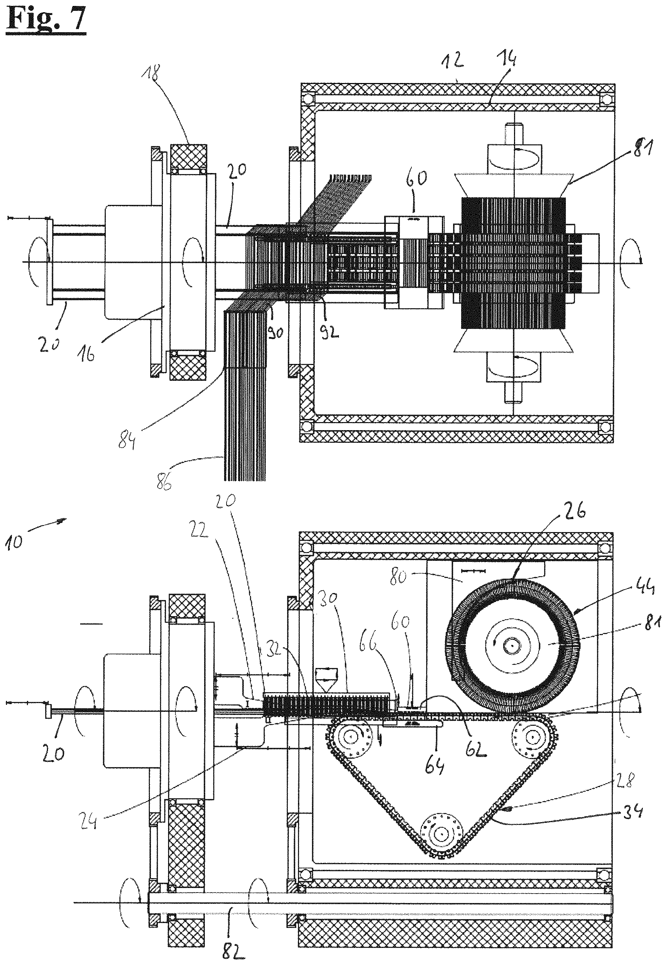

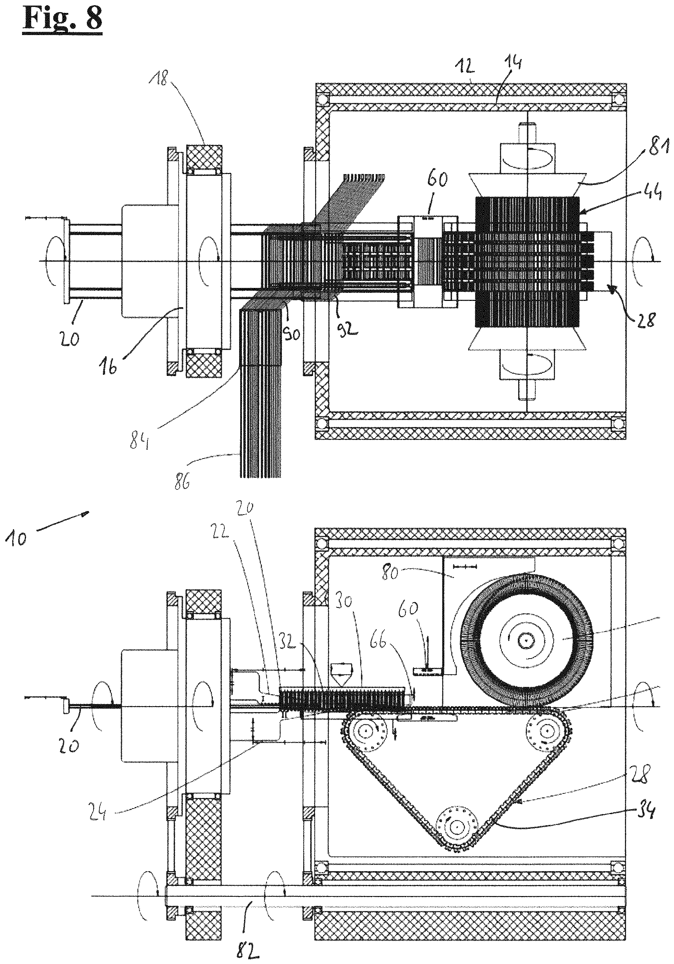

Zum Erreichen des in Fig.7 gezeigten Zustandes, werden die Übertragungsstifte 32 wieder in Eingriff mit den Windungen gebracht, die axial feststehende Klemmvorrichtung 66 wird geöffnet und mittels der Wickelkopfformvorrichtung 60 werden die im Bereich zwischen dem Formwerkzeug 62 und der Matrize 64 liegenden Wicklungsköpfe in ihre endgültige Form gebracht. Weiterhin wird die Wickelschablone 20 entgegen der Zustellrichtung im Verschiebeschritt zurückbewegt, wobei die Windungen am Ende der Wickelschablone 20 quasi abgestreift werden, so dass sie nachfolgend in die Aufnahmen 48, 50 der Gliederkette 34 überführt werden können. Ebenfalls in zeitlich nahem Zusammenhang werden die zweiten Nocken 80 in Richtung des Übertragungswerkzeuges 44 zugestellt, so dass die scheibenförmigen Nocken 80 in die Schlitze 78 eingreifen und die dort verlaufenden Windungen tiefer in die Radialnuten 74 hineindrücken, so dass sie sich, falls bereits vorhanden, auf die darunter befindliche Wickellage auflegen. Das radiale Eindrücken der Windungen kann auch bereits nach Abschluss des Schiebevorganges nach Fig. 4 ausgeführt werden, ohnehin bestehen bei den Einzelschritten von Fig. 4 bis 8 keine strengen Anforderungen an einen bestimmten zeitlichen Ablauf. Fig.8 zeigt die Vorrichtung nach dem Öffnen der Wickelkopfformvorrichtung 60 und dem Rückfahren der zweiten Nocken 80. Die zweiten Nocken 80 können alternativ auch so nachgeführt werden, dass sie in den Nuten verbleiben und entsprechend der Lagenhöhe der bereits eingebrachten Wicklung synchron zu den Zustellbewegungen langsam radial nach außen bewegt werden.

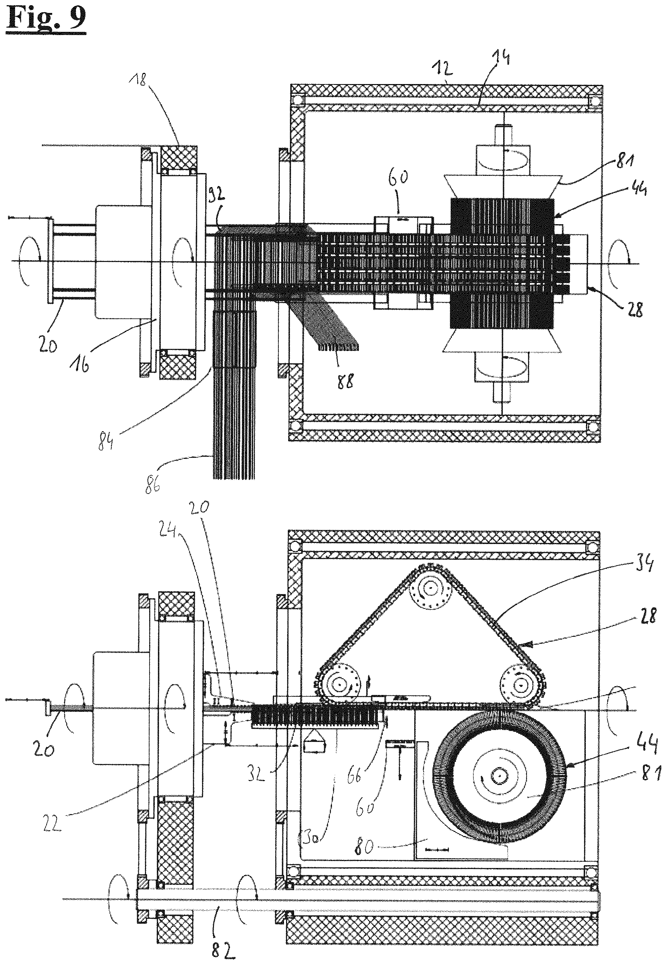

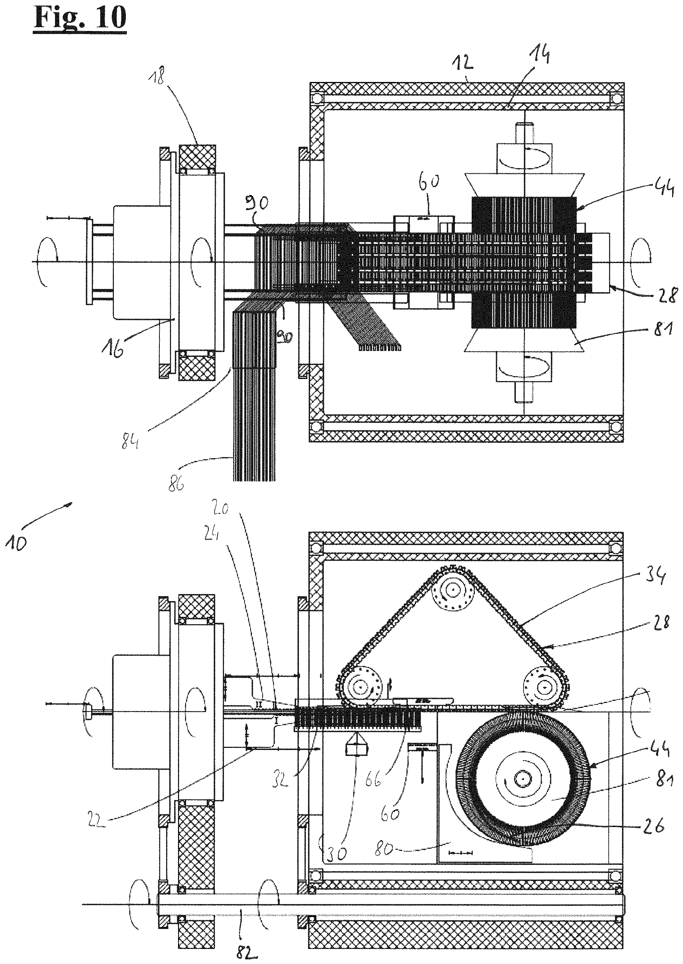

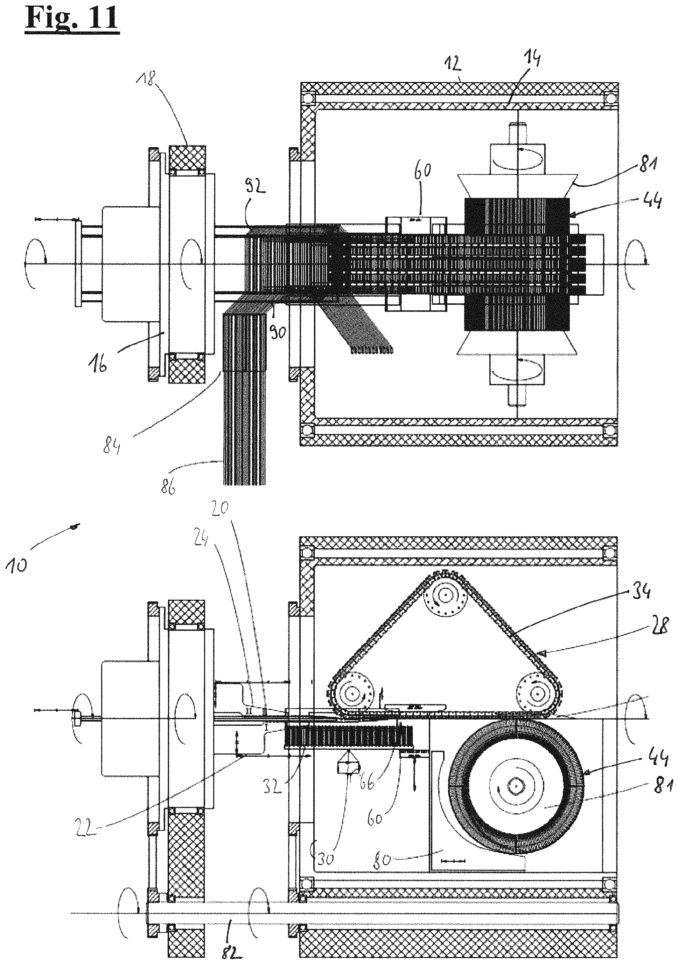

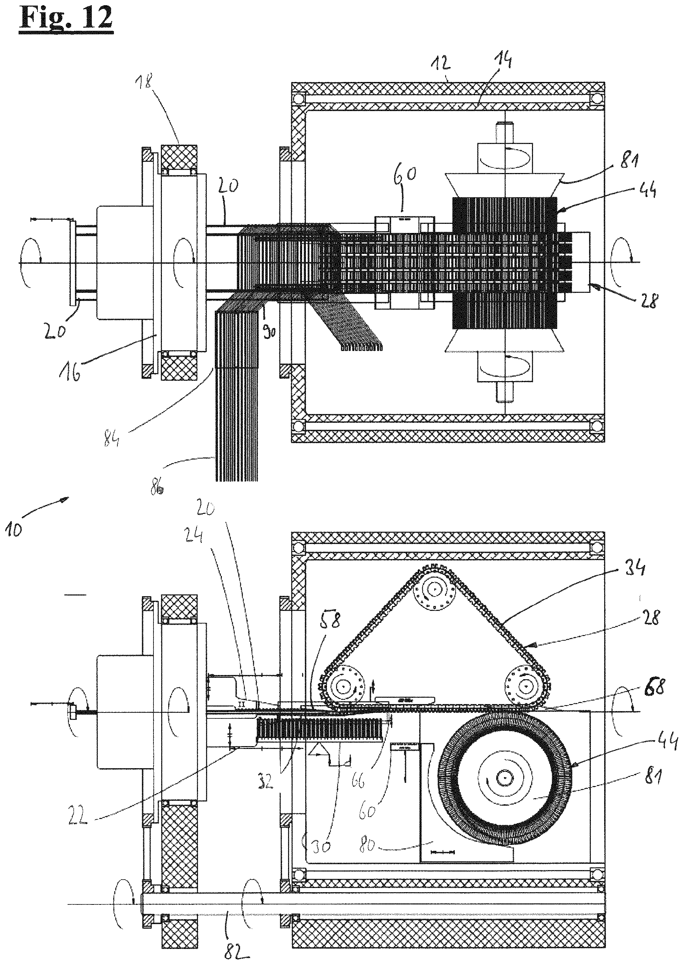

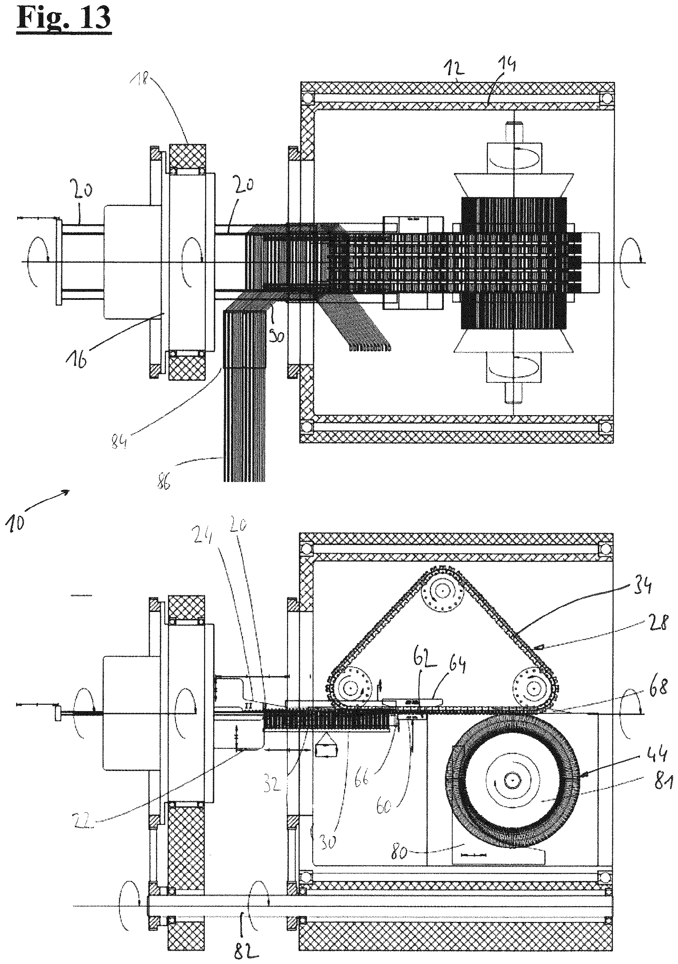

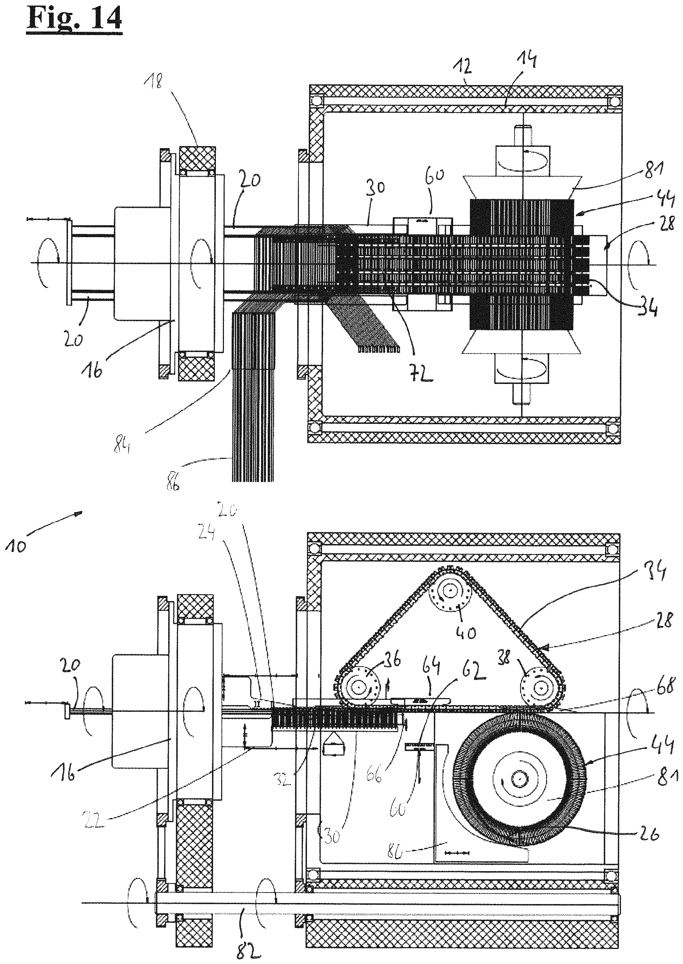

Im Übergang zu Fig. 9 wird zunächst der zweite (hier unten liegende) Drahtschieber 24 von der Wickelschablone 20 angehoben und dann axial in den Wickelkopfzurückgezogen, so dass die Wickelschablone 20 für eine weitere Halbwindung freigelegt wird, die durch Drehen der Wickelschablone um 180° erzeugt wird. Synchron wird die gesamte Transfereinheit 14 mit den Übertragungsstiften 32, der Wickelkopfformvorrichtung 66, der Transfervorrichtung 28 und der Drehführung 81 mit dem eingespannten Übertragungswerkzeug 44 um die Drehachse des Wickelkopfes gedreht. Der Drehvorgang kann auch bereits zu einem früheren Zeitpunkt durchgeführt werden. Mit dem Drehvorgang bewegt sich die Drahtführung zunächst bis auf die Wickelschablone in einer Art Bogenkurve, bevor sie in die in Fig. 10 gezeigte Klemmstellung zurückgezogen und mit den Drähten 86 erneut verklemmt wird. Der zweite Drahtschieber 24, der sich nun in der oberen Position befindet, wird axial ausgefahren und fasst die auf der Schablone aufliegenden Drähte 86 zur Vorbereitung des nächsten Verschiebevorganges. Der Zustand gemäß Fig. 10 entspricht somit bis auf die auf dem Kopf stehende Transfereinheit 14 und den vertauschten Drahtschiebern 22, 24 dem in Fig. 1 gezeigten Zustand. Nach dem Drehvorgang schließt sich entsprechend die im Prinzip gleiche Abfolge von Arbeitsschritten gemäß Fig. 11 bis 14 an, bevor nach dem erneuten Drehen wieder der Ausgangszustand gemäß Fig. 1 erreicht wird mit dem Unterschied, dass eine weitere Windung in das Übertragungswerkzeug übertragen worden ist.

Die obige Beschreibung dient ausschließlich der Erläuterung der vorliegenden Erfindung, die daher nicht auf eine der vorbeschriebenen Ausführungsformen beschränkt ist. Der Schutzumfang der vorliegenden Erfindung soll hingegen ausschließlich durch die beigefügten Ansprüche bestimmt sein.

### Bezugszeichenliste

- 10: Vorrichtung
- 12: Lagergehäuse
- 14: Transfereinheit
- 16: Wickelkopf
- 18: Lagerbock
- 20: Wickelschablone
- 22: Erster Drahtscheiber/-halter
- 24: Zweiter Drahtschieber/-halter
- 26: Wicklung
- 28: Transfervorrichtung
- 30: Träger
- 32: Übertragungsstifte
- 34: Gliederkette
- 36: Erste Umlenkrolle
- 38: Zweite Umlenkrolle
- 40: Dritte Umlenkrolle
- 42: Übergabestelle
- 44: Übertragungswerkzeug
- 46: Kettenglieder
- 48: Starre Aufnahmen
- 50: Variable Aufnahmen
- 52: Innenwandungen
- 54: Außenwandungen
- 56: Transportstifte
- 57: Ausnehmungen
- 58: Nockenbahn
- 60: Wickelkopfformvorrichtung
- 62: Formwerkzeug
- 64: Matrize
- 66: Klemmvorrichtung
- 68: Erste Nocken
- 70: Anlaufschrägen
- 72: Schlitze in Gliederkette
- 74: Radialnuten
- 76: Ringförmiger Träger
- 78: Schlitze in Übertragungswerkzeug
- 80: Zweite Nocken
- 81: Drehführung
- 82: Königswelle
- 84: Drahtführung
- 86: Drähte
- 88: Anschlussdrähte
- 90: Geneigter Drahtabschnitt
- 92: Wicklungsköpfe

## Patentansprüche

1. Verfahren zur Herstellung von Rotoren oder Statoren von elektrischen Maschinen, wobei die Rotoren oder Statoren Radialnuten aufweisen, in die die Stege von flachen Wicklungen (26) mit parallelen Stegen und diese verbindenden Wicklungsköpfen (92) eingezogen werden, wobei die flachen Wicklungen (26) auf einer rotierenden, leistenförmig flachen Wickelschablone (20) vorgefertigt werden und die zunächst flachen Wicklungen in die Radialnuten (74) eines Rotors oder eines Übertragungswerkzeuges (44) zur Weitergabe in die Nuten eines Stators eingezogen werden, **dadurch gekennzeichnet, dass** die Wicklung (26) auf einer Wickelschablone (20) erzeugt wird, die kürzer als die gesamte Wicklung ist, so dass die ersten erzeugten Windungen von der Wickelschablone (20) abgezogen werden, bevor die Herstellung der Wicklung (26) abgeschlossen ist, die abgezogenen Windungen in eine lineare Transfervorrichtung (28) übertragen werden, die synchron mit dem Erzeugen von Windungen auf der Wickelschablone (20) die fertigen Windungen an eine Entnahmeposition transportiert, wo die Windungen in die Radialnuten des Rotors oder in die Radialnuten (74) des Übertragungswerkzeuges (44) zum Übertragen der Wicklung (26) in die Radialnuten des Stators übergeben werden, wobei die Wickelschablone (20), die Transfervorrichtung (28) und der Rotor oder das Übertragungswerkzeug (44) gemeinsam um die Drehachse der Wickelschablone (20) immer dann gedreht werden, wenn die Wickelschablone (20) zum Formen von Windungen gedreht wird.

2. Verfahren nach Anspruch 1, **dadurch gekennzeichnet, dass** die Wicklung (26) durch wechselweises Verschieben von auf der Wickelschablone (20) liegenden Drahtstegen der jeweiligen Windung zu den zugeführten Drähten (86) und Rotieren der Wickelschablone (20) um 180° erzeugt wird und während des Verschiebens die Transfervorrichtung (28) um einen entsprechenden Weg parallel zur Drehachse der Wickelschablone (20) verstellt und der Rotor oder das Übertragungswerkzeug (44) synchron um seine eigene Mitteldrehachse gedreht wird.

3. Verfahren nach Anspruch 1 oder 2, **dadurch gekennzeichnet, dass** die Wicklungsköpfe (92) der Wicklung nach dem Verlassen der Wickelschablone (20) zwischen Verschiebevorgängen verklemmt werden.

4. Verfahren nach einem der Ansprüche 1 bis 3, **dadurch gekennzeichnet, dass** die Wicklungsköpfe (92) in der Transfervorrichtung (28) zwischen dem Verschieben zwischen zwei Formhälften (62, 64) geformt werden.

5. Verfahren nach einem der vorhergehenden Ansprüche, **dadurch gekennzeichnet, dass** die Windungen mittels erster Nocken (68) aus der Transfervorrichtung (28) in die Radialnuten (74) des Übertragungswerkzeug (44) oder des Rotors übertragen werden.

6. Verfahren nach Anspruch 5, **dadurch gekennzeichnet, dass** die Windungen mittels zweiter Nocken (80) in den Radialnuten (74) des Rotors oder des Übertragungswerkzeuges (44) radial nach innen gedrückt werden.

7. Verfahren nach Anspruch 5 oder 6, **dadurch gekennzeichnet, dass** die ersten und/oder die zweiten Nocken (80) in der Übertragungsrichtung hin und her bewegt werden und/oder in Bezug auf die Bewegungsrichtung der Wicklung Anlaufschrägen (70) aufweisen.

8. Verfahren nach einem der vorhergehenden Ansprüche, **dadurch gekennzeichnet, dass** die Windungen der Wicklung (26) in der Transfervorrichtung (28) in Aufnahmen (48, 50) abgelegt werden, die an und/oder zwischen Gliedern (46) einer Gliederkette (34) ausgebildet sind, wobei die Gliederkette (34) mittels zweier Umlenkrollen (36, 38) über den Bereich zwischen der Wickelschablone (20) und dem Übertragungswerkzeug (44) oder dem Rotor linear geführt wird.

9. Verfahren nach einem der vorhergehenden Ansprüche, **dadurch gekennzeichnet, dass** die Windungen mit Hilfe von zwischen sie eingreifenden Übertragungsstiften (32) beim Übertragen in die Transfervorrichtung (28) geführt werden.

10. Verfahren nach Anspruch 9, **dadurch gekennzeichnet, dass** die Übertragungsstifte (32) im Eingriff mit den Windungen während des Verschiebens mit den Windungen bewegt werden und zwischen den Verschiebvorgängen aus dem Eingriff mit den Windungen ausgerückt und in ihre Ausgangsposition zurückgeführt werden.

11. Verfahren nach einem der vorhergehenden Ansprüche, **dadurch gekennzeichnet, dass** zwischen dem Erzeugen der Windungen auf der Wickelschablone (20) und dem Übertragen der Windungen in die Transfervorrichtung (28) Isolierstreifen zwischen Phasen der Windungen eingelegt werden.

12. Vorrichtung zur Herstellung von Rotoren oder Statoren von elektrischen Maschinen mit einer Wickelvorrichtung (10), die einen Wickelkopf (16) mit einer drehbaren Wickelschablone (20), Drahtschieber (22, 24) und eine Drahtzuführeinrichtung (84) zum Erzeugen einer Wicklung (26) mit mehreren aus parallelen Stegen und diese verbindenden Wickelköpfen (92) bestehenden Windungen sowie eine Transfervorrichtung (28) zur Übergabe der Wicklung (26) an den Rotor oder ein Übertragungswerkzeug (44) zur nachfolgenden Übergabe der Wicklung (26) an den Stator aufweist, **dadurch gekennzeichnet, dass** die Wickelschablone (20) kürzer als die zu erzeugende Wicklung (26) ist und eine Drehvorrichtung vorgesehen ist, die eine synchrone Rotation der Wickelschablone (20), der Transfervorrichtung (28) und des Rotors oder des Übertragungswerkzeuges (44) um die Drehachse der Wickelschablone (20) wenigstens dann bewerkstelligt, wenn die Wicklung (26) sich von der Wickelschablone (20) bis zum Rotor oder dem Übertragungswerkzeug (44) erstreckt.

13. Vorrichtung nach Anspruch 12, **dadurch gekennzeichnet, dass** die Transfervorrichtung (28) parallele Aufnahmen (48, 50) für die Windungen der Wicklung (26) aufweist, wobei die Aufnahmen (48, 50) an oder zwischen benachbarten Gliedern (46) einer Gliederkette (34) ausbildet sind.

14. Vorrichtung nach Anspruch 13, **dadurch gekennzeichnet, dass** die Gliederkette (34) zwischen der Wickelschablone (20) und dem Rotor/dem Übertragungswerkzeug (44) linear gestreckt zwischen zwei Umlenkrollen (36, 38) geführt ist.

15. Vorrichtung nach einem der Ansprüche 12 bis 14, **dadurch gekennzeichnet, dass** erste Nocken (68) zur Übertragung der Windungen aus der Transfervorrichtung (28) in die Radialnuten (74) des Rotors/Übertragungswerkzeuges (44) und/oder zweite Nocken (80) zum Verschieben der Windungen in den Radialnuten (74) radial nach innen vorgesehen sind.

16. Vorrichtung nach Anspruch 15, **dadurch gekennzeichnet, dass** die ersten und/oder zweiten Nocken (68, 80) senkrecht zur Bewegungsrichtung der Windungen verstellbar beweglich sind und/oder in der Bewegungsrichtung der Windungen Anlaufschrägen (70) aufweisen.

17. Vorrichtung nach Anspruch 15 oder 16, **dadurch gekennzeichnet, dass** die ersten und/oder zweiten Nocken (68, 80) rippen- oder scheibenförmig ausgebildet sind und durch in der Bewegungsrichtung der Transfervorrichtung (28) oder der Drehrichtung des Übertragungswerkzeuges (44) verlaufende Schlitze 72, 78) in die Aufnahmen (48, 50) in der Transfervorrichtung (28) oder die Radialnuten (74) des Übertragungswerkzeuges (44) eingreifen.

18. Vorrichtung nach einem der Ansprüche 12 bis 17, **dadurch gekennzeichnet, dass** eine Wickelkopfformvorrichtung (60) vorgesehen ist, die die Wickelköpfe (92) der Windungen im Bereich der Transfervorrichtung (28) in ihre endgültige Form bringt.

19. Vorrichtung nach einem der Ansprüche 12 bis 18, **dadurch gekennzeichnet, dass** an der Übergabestelle zwischen der Wickelschablone (20) und der Transfervorrichtung (28) Übertragungsstifte (32) vorgesehen sind, die zwischen einer Eingriffsstellung, in welcher sie in die Windungen der Wicklung (26) eingreifen, und einer zurückgezogenen Stellung verstellbar sind, wobei sie sich in der Eingriffsstellung synchron beim Verschieben mit der Transfervorrichtung (28) bewegen und in der zurückgezogenen Stellung eine Rückstellung in die axiale Ausgangslage entgegen der Vorschubrichtung erfolgt.

20. Vorrichtung nach einem der vorhergehenden Ansprüche 12 bis 19, **dadurch gekennzeichnet, dass** eine Wickelkopfklemmvorrichtung (66) vorgesehen ist, die die Windungen/Wickelköpfe (92) zeitweise gegen die Transfervorrichtung (28) verklemmt und/oder diese in die Aufnahmen (48, 50) der Transfervorrichtung eindrückt.

21. Vorrichtung nach einem der vorhergehenden Ansprüche, **dadurch gekennzeichnet, dass** ein Lagergehäuse (12) vorgesehen ist, in welchem eine Transfereinheit (14), der eine Drehlagerung (81) für den Rotor/das Übertragungswerkzeug (44) und die Transfervorrichtung (28) zugeordnet sind, um die Drehachse der Wickelschablone (20) drehbar gelagert ist.

22. Vorrichtung nach Anspruch 21, **dadurch gekennzeichnet, dass** die Transfereinheit (14) und die Wickelschablone (20) drehstarr gekoppelt sind.

23. Vorrichtung nach einem der Ansprüche 12 bis 22, **dadurch gekennzeichnet, dass** wenigstens die Bewegungsabläufe der Vorrichtung (10), die das Verschieben oder Rotieren der Windungen betreffen, mechanisch durch eine Königswelle (82) oder elektronisch durch eine geeignete Sensorik zur Erfassung der Bewegungen in Verbindung mit durch Servomotoren gesteuerten Bewegungen synchronisiert sind.

## Claims

1. Method for producing rotors or stators of electric machines, wherein the rotors or stators have radial grooves into which the webs of flat coils (26) with parallel webs and winding heads (92) connecting the latter are inserted, wherein the flat coils (26) are prefabricated on a rotating strip-shaped flat former (20) and the initially flat coils are inserted into the radial grooves (74) of a rotor or a transposing tool (44) for passing on into the grooves of a stator, **characterised in that** the coil (26) is generated on a former (20) which is shorter than the whole coil such that the first windings generated are removed from the former (20) before the production of the coil (26) is complete, the removed windings are transposed into a linear transfer device (28) which, at the same time as windings are generated on the former (20), transports the finished windings to a removal position where the windings are transposed into the radial grooves of the rotor or into the radial grooves (74) of the transposing tool (44) for transposition of the coil (26) into the radial grooves of the stator, wherein the former (20), the transfer device (28) and the rotor or the transposing tool (44) are jointly rotated about the axis of rotation of the former (20) whenever the former (20) is rotated in order to form windings.

2. Method according to claim 1, **characterised in that** the coil (26) is produced by wire webs, lying on the former (20), of the respective winding being displaced alternately with respect to the fed wires (86) and the former (20) being rotated by 180°, and the transfer device (28) is adjusted during the displacement by a corresponding movement parallel to the axis of rotation of the former (20), and the rotor or the transposing tool (44) is rotated synchronously about its own central axis of rotation.

3. Method according to claim 1 or 2, **characterised in that** the winding heads (92) of the coil are clamped between displacement processes after leaving the former (20).

4. Method according to any of claims 1 to 3, **characterised in that** the winding heads (92) are formed in the transfer device (28) between the displacement between two forming halves (62, 64).

5. Method according to any of the preceding claims, **characterised in that** the windings are transposed from the transfer device (28) into the radial grooves (74) of the transposing tool (44) or the rotor by means of first cams (68).

6. Method according to claim 5, **characterised in that** the windings are pressed radially inward into the radial grooves (74) of the rotor or the transposing tool (44) by means of second cams (80).

7. Method according to claim 5 or 6, **characterised in that** the first and/or second cams (80) are moved back and forth in the transposition direction and/or have slopes (70) with respect to the direction of movement of the coil.

8. Method according to any of the preceding claims, **characterised in that** the windings of the coil (26) are deposited in the transfer device (28) in holders (48, 50) which are designed on and/or between links (46) of a link chain (34), wherein the link chain (34) is guided linearly over the region between the former (20) and the transposing tool (44) or the rotor by means of two deflecting rollers (36, 38).

9. Method according to any of the preceding claims, **characterised in that** the windings are guided with the aid of transposing pins (32) engaging between the latter during transposition into the transfer device (28).

10. Method according to claim 9, **characterised in that** the transposing pins (32) are moved into engagement with the windings during the displacement with the windings, and are moved out of engagement with the windings between the displacement processes and returned to their starting position.

11. Method according to any of the preceding claims, **characterised in that** insulating strips are inserted between stages of the windings between producing the windings on the former (20) and transposing the windings into the transfer device (28).

12. Device for producing rotors or stators of electric machines, with a winding device (10) which has a winding head (16) with a rotatable former (20), wire shifters (22, 24) and a wire feed apparatus (84) for producing a coil (26) with multiple windings, consisting of parallel webs and winding heads (92) connecting them, as well as a transfer device (28) for transposing the coil (26) onto the rotor, or a transposing tool (44) for subsequently transposing the coil (26) onto the stator, **characterised in that** the former (20) is shorter than the coil (26) to be produced and a rotating device is provided which effects a synchronous rotation of the former (20), the transfer device (28) and the rotor or the transposing tool (44) about the axis of rotation of the former (20) at least when the coil (26) extends from the former (20) to the rotor or the transposing tool (44).

13. Device according to claim 12, **characterised in that** the transfer device (28) has parallel holders (48, 50) for the windings of the coil (26), wherein the holders (48, 50) are designed on or between adjacent links (46) of a link chain (34).

14. Device according to claim 13, **characterised in that** the link chain (34) between the former (20) and the rotor/transposing tool (44) is guided in a linearly extended fashion between two deflecting rollers (36, 38).

15. Device according to any of claims 12 to 14, **characterised in that** first cams (68) for transposing the windings from the transfer device (28) into the radial grooves (74) of the rotor/transposing tool (44), and/or second cams (80) for displacing the windings into the radial grooves (74), are provided radially inwards.

16. Device according to claim 15, **characterised in that** the first and/or second cams (68, 80) can be adjusted perpendicular to the direction of movement of the windings and/or have slopes (70) in the direction of movement of the windings.

17. Device according to claim 15 or 16, **characterised in that** the first and/or second cams (68, 80) are designed in the form of ribs or disks and engage, through slots (72, 78) which run in the direction of movement of the transfer device (28) or the direction of rotation of the transposing tool (44), into the holders (48, 50) in the transfer device (28) or the radial grooves (74) of the transposing tool (44).

18. Device according to any of claims 12 to 17, **characterised in that** a winding head forming device (60) is provided which brings the winding heads (92) of the windings into their final form in the region of the transfer device (28).

19. Device according to any of claims 12 to 18, **characterised in that** transposing pins (32), which can be adjusted between an engaged position in which they engage in the windings of the coil (26) and a retracted position, are provided at the transition point between the former (20) and the transfer device (28), wherein, in the engaged position, they move synchronously during displacement with the transfer device (28), and, in the retracted position, a rewinding to the axial starting situation takes place, counter to the direction of advance.

20. Device according to any of the preceding claims 12 to 19, **characterised in that** a winding head clamping device (66) is provided which temporarily clamps the windings/winding heads (92) against the transfer device (28) and/or presses said windings/winding heads into the holders (48, 50) of the transfer device.

21. Device according to any of the preceding claims, **characterised in that** a bearing housing (12) in which a transfer unit (14), with which a rotary bearing (81) for the rotor/transposing tool (44) and the transfer device (28) is associated, is mounted so that it can rotate about the axis of rotation of the former (20).

22. Device according to claim 21, **characterised in that** the transfer unit (14) and the former (20) are coupled so that they are torsionally rigid.

23. Device according to any of claims 12 to 22, **characterised in that** at least the movement sequences of the device (10) which relate to the displacement or rotation of the windings are synchronised mechanically by a main shaft (82) or electronically by a suitable sensor system for detecting the movements in connection with movements controlled by servomotors.

## Revendications

1. Procédé de fabrication de rotors ou stators de machines électriques, dans lequel les rotors ou stators présentent des rainures radiales dans lesquelles sont insérées les traverses d'enroulements plats (26) avec traverses parallèles et têtes d'enroulement (92) reliant celles-ci, dans lequel les enroulements plats (26) sont préfabriqués sur un gabarit d'enroulement (20) plat, en forme de barre et en rotation, et les enroulements d'abord plats sont insérés dans les rainures radiales (74) d'un rotor ou d'un outil de transport (44) afin d'être insérés ensuite dans les rainures d'un stator, **caractérisé en ce que** l'enroulement (26) est produit sur un gabarit d'enroulement (20) qui est plus court que l'enroulement total, de telle sorte que les premières spires produites sont retirées du gabarit d'enroulement (20) avant que la fabrication de l'enroulement (26) soit terminée, les spires retirées sont transportées dans un dispositif de transfert linéaire (28) qui, de manière synchrone avec la production de spires sur le gabarit d'enroulement (20), transporte les spires fabriquées jusqu'à une position d'enlèvement où les spires sont transférées dans les rainures radiales du rotor ou dans les rainures radiales (74) de l'outil de transport (44) afin de transporter l'enroulement (26) jusque dans les rainures radiales du stator, dans lequel le gabarit d'enroulement (20), le dispositif de transfert (28) et le rotor ou l'outil de transport (44) tournent ensemble autour de l'axe de rotation du gabarit d'enroulement (20) à chaque fois que le gabarit d'enroulement (20) tourne pour former des spires.

2. Procédé selon la revendication 1, **caractérisé en ce que** l'enroulement (26) est produit par translation alternée de traverses de fils, posées sur le gabarit d'enroulement (20), de la spire respective vers les fils (86) amenés et par rotation du gabarit d'enroulement (20) de 180° et, pendant la translation du dispositif de transfert (28), il est décalé d'un trajet correspondant parallèlement à l'axe de rotation du gabarit d'enroulement (20) et le rotor ou l'outil de transport (44) est tourné de manière synchrone autour de son propre axe de rotation médian.

3. Procédé selon la revendication 1 ou 2, **caractérisé en ce que**, après avoir quitté le gabarit d'enroulement (20), les têtes d'enroulement (92) de l'enroulement sont bloquées entre des opérations de translation.

4. Procédé selon l'une quelconque des revendications 1 à 3, **caractérisé en ce que** les têtes d'enroulement (92) sont formées dans le dispositif de transfert (28) entre la translation entre deux demi-moules (62, 64).

5. Procédé selon l'une quelconque des revendications précédentes, **caractérisé en ce que** les spires sont transportées au moyen de premières cames (68) hors du dispositif de transfert (28) jusque dans les rainures radiales (74) de l'outil de transport (44) ou du rotor.

6. Procédé selon la revendication 5, **caractérisé en ce que** les spires sont poussées de façon radiale vers l'intérieur au moyen de deuxièmes cames (80) dans les rainures radiales (74) du rotor ou de l'outil de transport (44).

7. Procédé selon la revendication 5 ou 6, **caractérisé en ce que** les premières et/ou les deuxièmes cames (80) sont déplacées en va-et-vient dans la direction de transport et/ou présentent des biseaux de démarrage (70) par rapport à la direction de déplacement de l'enroulement.

8. Procédé selon l'une quelconque des revendications précédentes, **caractérisé en ce que** les spires de l'enroulement (26) dans le dispositif de transfert (28) sont déposées dans des logements (48, 50) qui sont réalisés au niveau et/ou entre des maillons (46) d'une chaîne à maillons (34), laquelle chaîne à maillons (34) est guidée de manière linéaire au moyen de deux poulies de renvoi (36, 38) au-dessus de la zone entre le gabarit d'enroulement (20) et l'outil de transport (44) ou le rotor.

9. Procédé selon l'une quelconque des revendications précédentes, **caractérisé en ce que**, lors du transport jusque dans le dispositif de transfert (28), les spires sont guidées à l'aide de broches de transport (32) mordant entre elles.

10. Procédé selon la revendication 9, **caractérisé en ce que**, pendant la translation, les broches de transport (32) en prise avec les spires sont déplacées avec les spires et, entre les opérations de translation, elles sont sorties des spires et ramenées dans leur position de départ.

11. Procédé selon l'une quelconque des revendications précédentes, **caractérisé en ce que**, entre la production des spires sur le gabarit d'enroulement (20) et le transport des spires jusque dans le dispositif de transfert (28), des bandes isolantes sont placées entre des phases des spires.

12. Dispositif de fabrication de rotors ou stators de machines électriques avec un dispositif d'enroulement (10), qui présente une tête d'enroulement (16) avec un gabarit d'enroulement (20) pouvant tourner, des coulisseaux de fils (22, 24) et un appareil d'amenée de fils (84) afin de produire un enroulement (26) avec plusieurs spires constituées de traverses parallèles et de têtes d'enroulement (92) reliant celles-ci ainsi qu'un dispositif de transfert (28) destiné à transférer l'enroulement (26) au rotor ou à un outil de transport (44) en vue du transfert de l'enroulement (26) au stator, **caractérisé en ce que** le gabarit d'enroulement (20) est plus court que l'enroulement (26) à produire et un dispositif de rotation est prévu qui met en œuvre une rotation synchrone du gabarit d'enroulement (20), du dispositif de transfert (28) et du rotor ou de l'outil de transport (44) autour de l'axe de rotation du gabarit d'enroulement (20) au moins lorsque l'enroulement (26) s'étend du gabarit d'enroulement (20) jusqu'au rotor ou à l'outil de transport (44).

13. Dispositif selon la revendication 12, **caractérisé en ce que** le dispositif de transfert (28) présente des logements parallèles (48, 50) pour les spires de l'enroulement (26), lesquels logements (48, 50) sont réalisés au niveau ou entre des maillons voisins (46) d'une chaîne à maillons (34).

14. Dispositif selon la revendication 13, **caractérisé en ce que** la chaîne à maillons (34) est guidée entre deux poulies de renvoi (36, 38) de manière à s'étendre linéairement entre le gabarit d'enroulement (20) et le rotor ou outil de transport (44).

15. Dispositif selon l'une quelconque des revendications 12 à 14, **caractérisé en ce que** des premières cames (68) sont prévues pour le transport des spires hors du dispositif de transfert (28) jusque dans les rainures radiales (74) du rotor ou outil de transport (44) et/ou des deuxièmes cames (80) sont prévues pour la translation des spires dans les rainures radiales (74) de façon radiale vers l'intérieur.

16. Dispositif selon la revendication 15, **caractérisé en ce que** les premières et/ou deuxièmes cames (68, 80) sont mobiles de manière à pouvoir être décalées perpendiculairement à la direction de déplacement des spires et/ou présentent des biseaux de démarrage (70) dans la direction de déplacement des spires.

17. Dispositif selon la revendication 15 ou 16, **caractérisé en ce que** les premières et/ou deuxièmes cames (60, 80) sont réalisées en forme de nervures ou de disques et pénètrent, à travers des fentes (72, 78) s'étendant dans la direction de déplacement du dispositif de transfert (28) ou dans la direction de rotation de l'outil de transport (44), jusque dans les logements (48, 50) dans le dispositif de transfert (28) ou jusque dans les rainures radiales (74) de l'outil de transport (44).

18. Dispositif selon l'une quelconque des revendications 12 à 17, **caractérisé en ce qu'**il est prévu un dispositif de mise en forme de tête d'enroulement (60) qui donne leur forme définitive aux têtes d'enroulement (92) des spires dans la zone du dispositif de transfert (28).

19. Dispositif selon l'une quelconque des revendications 12 à 18, **caractérisé en ce que**, au niveau du point de transfert entre le gabarit d'enroulement (20) et le dispositif de transfert (28), il est prévu des broches de transport (32) qui peuvent être décalées entre une position en prise, dans laquelle elles mordent dans les spires de l'enroulement (26), et une position en retrait, lesquelles broches de transport, dans la position en prise, se déplacent de manière synchrone lors de la translation avec le dispositif de transfert (28) et, dans la position en retrait, effectuent un recul dans la position de départ axiale à l'encontre de la direction d'avance.

20. Dispositif selon l'une quelconque des revendications 12 à 19 précédentes, **caractérisé en ce qu'**il est prévu un dispositif de blocage de tête d'enroulement (66) qui bloque les spires/têtes d'enroulement (92) temporairement contre le dispositif de transfert (28) et/ou les pousse dans les logements (48, 50) du dispositif de transfert.

21. Dispositif selon l'une quelconque des revendications précédentes, **caractérisé en ce qu'**il est prévu un logement de palier (12) dans lequel une unité de transfert (14), à laquelle sont associés un palier rotatif (81) pour le rotor/outil de transport (44) et le dispositif de transfert (28), est logée de manière à pouvoir tourner autour de l'axe de rotation du gabarit d'enroulement (20).

22. Dispositif selon la revendication 21, **caractérisé en ce que** l'unité de transfert (14) et le gabarit d'enroulement (20) sont couplés de manière rigide en torsion.

23. Dispositif selon l'une quelconque des revendications 12 à 22, **caractérisé en ce qu'**au moins les opérations de déplacement du dispositif (10) qui concernent la translation ou la rotation des spires sont synchronisées mécaniquement par un arbre de renvoi (82) ou électroniquement par un système capteur approprié destiné à la détection des déplacements en relation avec des déplacements commandés par des servomoteurs.
